# EUROPÄISCHE PATENTSCHRIFT

(11) **EP 1 272 073 B1**
(45) Veröffentlichungstag und Bekanntmachung des Hinweises auf die Patenterteilung: **23.11.2005**
(21) Anmeldenummer: 01919195.6
(22) Anmeldetag: 13.03.2001
(51) Int. Cl.: A47J 27/08

(54) **DAMPFDRUCK-KOCHTOPF**
STEAM PRESSURE COOKING POT
AUTOCUISEUR

(30) Priorität: 27.03.2000 DE 10014582
(43) Veröffentlichungstag der Anmeldung: 08.01.2003
(73) Patentinhaber: Niese, Ursula, 67745 Grumbach (DE)
(72) Erfinder: Niese, Ursula, 67745 Grumbach (DE)
(74) Vertreter: Vièl, Christof
(86) Internationale Anmeldenummer: PCT/DE2001/000957
(87) Internationale Veröffentlichungsnummer: WO 2001/072184

(56) Entgegenhaltungen:
- DE-A- 19 518 305
- US-A- 4 733 795

## Beschreibung

Die Erfindung betrifft einen Dampfdruck-Kochtopf, bestehend aus einem Topf mit einem horizontal nach außen abgewinkelten Schüttrand, einem zum Verschließen des Topfes auf diesem zentriert auflegbaren Deckel, einem zwischen Topf und Deckel angeordneten gummielastischen Dichtelement, welches in einer umlaufenden Nut des Deckels gehalten wird und dessen Dichtlippe gegen die Innenwandung des Topfes anliegt, sowie einer Verriegelungseinrichtung, die bei geschlossenem Dampfdruck-Kochtopf Deckel und Schüttrand umgreift und bei geöffnetem Dampfdruck-Kochtopf den Schüttrand freigibt.

Bei derartigen Dampfdruck-Kochtöpfe ist das Problem der Abdichtung zwischen Topf und Deckel von großer Bedeutung.

Es ist zweckmäßig, das Dichtelement so anzuordnen, dass mit steigendem Druck ein Anpressen des Dichtelementes an die abzudichtende Stelle erreicht wird, wie dies beispielsweise in der EP 0 108 203 B1 oder DE 195 18305 A dargestellt ist. Bei niedrigen Drücken, wie sie am Anfang des Kochvorganges vorliegen, ergeben sich allerdings häufig Undichtigkeiten im Bereich des Dichtelementes.

Häufig ergibt sich auch das Problem, dass entweder das Auswechseln des Dichtelementes nur mit Schwierigkeiten möglich ist oder aber dass der Bereich des Dichtelementes nur schwierig zu reinigen ist.

Der Erfindung liegt daher die Aufgabe zugrunde, eine Abdichtung zwischen dem Topf und dem Deckel eines Dampfdruck-Kochtopfes zu schaffen, die sowohl bei niedrigen als auch bei hohen Drücken dampfundurchlässig ist und die sowohl leicht zu montieren als auch leicht zu warten ist.

Diese Aufgabe wird erfindungsgemäß dadurch gelöst, dass der Topf mit einer umlaufenden, nach innen weisenden, v-förmigen Sicke versehen ist und in seinem oberen Randbereich eine konusförmige Fläche bildet, auf die beim Aufsetzen des Deckels die Dichtlippe des Dichtelementes aufläuft und dass das Dichtelement im wesentlichen u-förmig ausgebildet ist, wobei die beiden die Dichtlippen bildenden Schenkel des Dichtelementes im wesentlichen parallel und koaxial zur senkrechten Achse des Topfes angeordnet sind.

Die Erfindung ermöglicht das Anliegen der Dichtlippe des Dichtelementes an der Wand des Topfes und nicht im Bereich des Schüttrandes. Somit kann der Schüttrand schmal ausgebildet sein, zumal der hieraus resultierende Stabilitätsverlust durch die Sicke mehr als kompensiert wird. Der für das Abdichten erforderliche Hub der Dichtung ist bei dieser Ausführung gering. Dadurch, dass die Dichtlippe auf die zu ihr schräg verlaufende konusförmige Fläche aufläuft, wird weiterhin sichergestellt, dass von Anfang an eine vollständige Dichtigkeit erreichbar ist. Aufgrund der Erhöhung der Steifigkeit des Topfes kann dieser bei gleichen Festigkeitseigenschaften eine dünnere Wanddicke aufweisen. Durch die u-förmige Ausbildung des Dichtelementes verhindert die eine Dichtlippe das Austreten von Dampf zwischen der Nut und dem Dichtelement, während die andere Dichtlippe zum Abdichten des Bereiches zwischen dem Topf und dem Deckel dient.

Es ist vorteilhaft, dass die äußere Dichtlippe auf ihrer Innenseite im Bereich ihrer Anbindung an den Dichtungskörper eine umlaufende Ausnehmung aufweist.

Hierdurch wird das Anlegen der äußeren Dichtlippe an die konusförmige Fläche erleichtert.

Schließlich ist es erfindungsgemäß vorgesehen, dass der Außendurchmesser der äußeren Dichtlippe kleiner ist als der Nenndurchmesser des Topfes.

Im folgendenden wird die Erfindung anhand von Ausführungsbeispielen erläutert. Es zeigen
- Fig. 1: einen Schnitt durch den Randbereich von Topf und Deckel des Dampfdruck-Kochtopfes in offenem Zustand,
- Fig. 2: einen Schnitt durch den Randbereich von Topf und Deckel des Dampfdruck-Kochtopfes in geschlossenem Zustand.

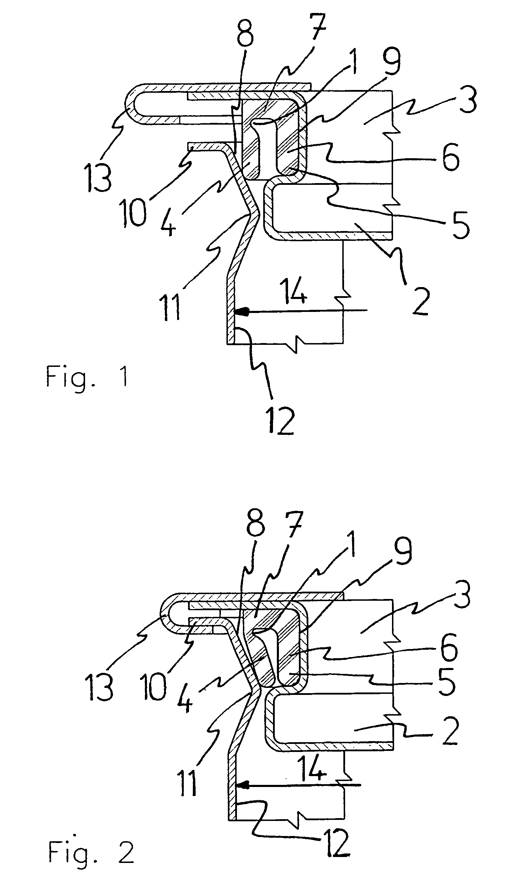

In Fig. 1 ist ein Dampfdruck-Kochtopf dargestellt, der aus einem Topf 12 mit einem horizontal nach außen ragenden Schütirand 10 und einem auf diesem zentriert auflegbaren Deckel 3 besteht. In einer umlaufenden Nut 9 des Deckels 3 ist ein gummielastisches Dichtelement 6 angeordnet, dessen Dichtlippen 4, 5 parallel und koaxial zur senkrechten Topfachse angeordnet sind und einen geringeren Durchmesser als den Nenndurchmesser 14 (Innendurchmesser unterhalb der Sicke 11) des Topfes 12 aufweisen.

Das Dichtelement 6 ist im wesentlichen u-förmig ausgebildet und die beiden die Dichtlippen 4, 5 bildenden Schenkel des u-förmigen Dichtelementes 6 sind bei nicht aufliegendem Deckel 3 im wesentlichen parallel zur Wand des Topfes 12 angeordnet.

Durch die u-förmige Ausbildung des Dichtelementes 6 wird erreicht, dass die beiden Dichtlippen 4, 5 federnd wirken, wenn sie gegeneinander gedrückt werden. Diese federnde Wirkung lässt sich durch Variation der Maße des Dichtungskörpers 7 und der Dichtlippen 4, 5 einstellen.

Die äußere Dichtlippe 4 weist auf ihrer Innenseite im Bereich ihrer Anbindung an den Dichtungskörper 7 eine umlaufende Ausnehmung 1 auf, was die Beweglichkeit der äußeren Dichtlippe 4 auf die innere Dichtlippe 5 hin erhöht. Diese Ausnehmung 1 darf jedoch nicht zu stark ausgeprägt sein, da dann die Rückstellkraft der äußeren Dichtlippe 4 zu gering würde.

Weiterhin ist eine Verriegelungsvorrichtung 13 vorgesehen, die bei geschlossenem Dampfdruck-Kochtopf 2 Deckel 3 und Schüttrand 10 umgreift und bei geöffnetem Dampfdruck-Kochtopf 2 den Schüttrand 10 freigibt.

Der Topf 12 weist in seinem oberen Randbereich unterhalb des Schüttrandes 10 eine umlaufende, nach innen gerichtete v-förmige Sicke 11 auf und bildet so in seinem oberen Randbereich eine konusförmige Fläche 8, auf die - wie in Fig. 1 dargestellt - beim Schließen des Dampfdruck-Kochtopfes 2 die äußere Dichtlippe 4 des Dichtelementes 6 aufläuft und sofort den Topfinhalt zur Umgebung hin abdichtet.

Beim weiteren Schließen gleitet die äußere Dichtlippe 4 an der konusförmigen Fläche 8 entlang und wird auf die innere Dichtlippe 5 hin gebogen, was durch die umlaufende Ausnehmung 1 erleichtert wird. Ist der Topf 12 geschlossen und umgreift die Verriegelungseinrichtung 13 den Schüttrand 10 - Fig. 2 - hat die äußere Dichtlippe 4 im wesentlichen die konusförmige Fläche 8 durchlaufen und liegt fast an der Spitze der inneren Dichtlippe 5 an. Der aufgrund der v-förmigen Sicke 11 nur geringe Spalt zwischen dem Rand des Topfes 12 und dem Deckel 3 wird durch das zwischen der konusförmigen Fläche 8 und der umlaufenden Nut 9 eingepreßte Dichtelement 6 abgedichtet.

## Patentansprüche

1. Dampfdruck-Kochtopf, im wesentlichen bestehend aus einem Topf (12) mit einem horizontal nach außen abgewinkelten Schüttrand (10), einem zum Verschließen des Topfes auf diesem zentriert auflegbaren Deckel (3), einem zwischen Topf und Deckel angeordneten gummi-elastischen Dichtelement (6), welches in einer umlaufenden Nut des Deckels gehalten wird und dessen Dichtlippe (4) gegen die Innenwandung des Topfes anliegt, sowie einer Verriegelungseinrichtung (13), die bei geschlossenem Dampfdruck-Kochtopf Deckel und Schüttrand umgreift und bei geöffnetem Dampfdruck-Kochtopf den Schüttrand freigibt, wobei der Topf (12) mit einer umlaufenden, nach innen weisenden, v-förmigen Sicke (11) versehen ist und dass das Dichtelement (6) im wesentlichen u-förmig ausgebildet ist, wobei die beiden die Dichtlippen (4, 5) bildenden Schenkel des Dichtelementes (6) im wesentlichen parallel und koaxial zur senkrechten Achse des Topfes (12) angeordnet sind, **dadurch gekennzeichnet**, der Topf (12) dass in seinem oberen Randbereich eine konusförmige Fläche (8) bildet, auf die beim Aufsetzen des Deckels (3) die Dichtlippe (4) des Dichtelementes (6) aufläuft.

2. Dampfdruck-Kochtopf gemäß Anspruch 1, **dadurch gekennzeichnet, dass** die äußere Dichtlippe (4) auf ihrer Innenseite im Bereich ihrer Anbindung an den Dichtungskörper (7) eine umlaufende Ausnehmung (1) aufweist.

3. Dampfdruck-Kochtopf gemäß Anspruch 1, **dadurch gekennzeichnet, dass** der Außendurchmesser der äußeren Dichtlippe (4) kleiner ist als der Nenndurchmesser des Topfes (12).

## Claims

1. Steam pressure cooker, consisting essentially of a pot (12) with a pouring rim (10) that is bent horizontally outwards, a lid (3) that can be placed centrally upon said pot to close it, an elastomeric sealing element (6) fitted between the pot and its lid, which sealing element is retained in a circumferential groove in the lid and whose sealing lip (4) bears against the inside wall of the pot, and a locking device (13) that embraces the lid and the pouring rim when the steam pressure cooker is closed and releases the pouring rim when the steam pressure cooker is open, the pot (12) being provided with an inwardly facing V-shaped circumferential depression (11), **characterised in that** at its upper edge, the pot (12) forms a tapered surface (8) against which the sealing lip (4) of the sealing element (6) bears when the lid (3) is put on, and that the sealing element (6) is essentially U-shaped, with the two legs of the sealing element (6), which form the sealing lips (4, 5), being in essentially parallel, coaxial relationship to the vertical axis of the pot (12).

2. Steam pressure cooker according to claim 1, **characterised in that** the outer sealing lip (4) has an inside circumferential groove (1) in the area of its attachment to the sealing body (7).

3. Steam pressure cooker according to claim 1 or 2, **characterised in that** the external diameter of the outer sealing lip (4) is smaller than the nominal diameter of the pot (12).

## Revendications

1. Autocuiseur, constitué essentiellement d'une casserole (12) ayant un bord de versement (10) replié horizontalement vers l'extérieur, d'un couvercle (3) pouvant être posé de façon centrée sur la casserole pour la fermer, d'un élément d'étanchéité (6) élastique comme du caoutchouc placé entre la casserole et le couvercle, lequel élément d'étanchéité est maintenu dans une gorge faisant le tour du couvercle et dont la lèvre d'étanchéité (4) est contre la paroi interne de la casserole, ainsi que d'un dispositif de verrouillage (13) qui enserre le couvercle et le bord de versement lorsque l'autocuiseur est fermé et libère le bord de versement lorsque l'autocuiseur est ouvert, la casserole (12) étant munie d'un enfoncement périphérique, orienté vers l'intérieur, en forme de V, l'élément d'étanchéité (6) ayant une forme essentiellement en U, les deux branches de l'élément d'étanchéité (6) formant les lèvres d'étanchéité (4, 5) étant disposées essentiellement parallèles et coaxiales à l'axe vertical de la casserole (12), **caractérisé en ce que** la casserole (12) forme dans la partie de son bord supérieur une surface conique (8) sur laquelle la lèvre d'étanchéité (4) de l'élément d'étanchéité (6) s'appuie lorsque le couvercle (3) est mis en place.

2. Autocuiseur selon la revendication 1, **caractérisé en ce que** la lèvre d'étanchéité extérieure (4) présente un évidement périphérique (1) sur son côté intérieur, au niveau de son raccord avec le corps d'étanchéité (7).

3. Autocuiseur selon la revendication 1, **caractérisé en ce que** le diamètre extérieur de la lèvre d'étanchéité extérieure (4) est inférieur au diamètre nominal de la casserole (12).
